(19) **Europäisches Patentamt / European Patent Office / Office européen des brevets**

(11) **EP 1 811 765 B1**

(12) **EUROPEAN PATENT SPECIFICATION**

(45) Date of publication and mention of the grant of the patent:
**13.09.2017 Bulletin 2017/37**

(51) Int Cl.:
***H04N 1/62*** *(2006.01)*

(21) Application number: **07001369.3**

(22) Date of filing: **23.01.2007**

(54) **Color enhancing method, color enhancing system, color adjusting system and color gamut mapping method**

Farbstichkorrekturverfahren und -Vorrichtung, Farbeinstellungvorrichtung und Umsetzung des Farbtonbereichs

Procédé et système d'amélioration de couleur, système d'ajustement de couleur et procédé de conversion de gamme de couleur

(84) Designated Contracting States:
**DE FR GB**

(30) Priority: **24.01.2006 US 761997 P**
**30.03.2006 US 393404**

(43) Date of publication of application:
**25.07.2007 Bulletin 2007/30**

(73) Proprietor: **Sharp Kabushiki Kaisha**
**Osaka-shi, Osaka 545-8522 (JP)**

(72) Inventor: **Pan, Hao**
**Camas, WA 98607 (US)**

(74) Representative: **Müller Hoffmann & Partner**
**Patentanwälte mbB**
**St.-Martin-Strasse 58**
**81541 München (DE)**

(56) References cited:
**EP-A- 1 453 002        GB-A- 2 388 737**
**US-A1- 2003 043 394    US-A1- 2003 108 245**
**US-A1- 2005 281 458**

- **KRAMBERGER I: "Real-time skin feature identification in a time-sequential video stream" OPTICAL ENGINEERING SPIE USA, vol. 44, no. 4, April 2005 (2005-04), pages 47201-1, XP002464894 ISSN: 0091-3286**

Printed by Jouve, 75001 PARIS (FR)

**Description**

FIELD OF THE INVENTION

The present invention relates to a color enhancement technique using skin color detection.

BACKGROUND OF THE INVENTION

The HSV (hue, saturation, value), or HSB (hue, saturation, brightness) model of the color space model facilitates a more intuitive modification of the colors of an image than changing the colors of an image based directly upon the modification of three primary colors model, i.e. R, G, and B. The RGB color space has the shape of a cube while the HSV color space has the shape of a hexagonal cone. The HSV cone is a non-linear transformation of the RGB cube and at times it is referred to as a perceptual model. 'Perceptual' means the attributes that are more akin to the way in which human beings think of color.

HSV model facilitates modification of the range or gamut of an RGB display device using the perceptually based variables, i.e. hue, saturation and value/brightness. The HSV model is based on polar coordinates (r, e, z) rather than Cartesians coordinates used in the RGB model. Hue, or tint or tone, is represented as an angle about the z axis, ranging from 0° through 360°. Vertices of the hexagon are separated by 60° increment. Red is at H=0°, Yellow at H=60°, Green at H=120°, and Cyan at H=180°. Complementary colors are 180° spaced apart from each other. Distance from the z axis represents saturation (S): the amount of color present. S varies from 0 to 1. It is represented in this model as the ratio of the purity of a hue. S=1 represents maximum purity of this hue. A hue is the to be one-quarter purity at S=0.25. At S=0, the gray scale is resulted. V, value of HSV, varies from 0 at the apex of the hexcone to 1 at the bottom of the hexcone. V=0 represents blackness. With V=1, color has his maximum intensity. When V=1 and S=1, we have the pure hue. Whiteness is obtained at the location of V=1 and S=0.

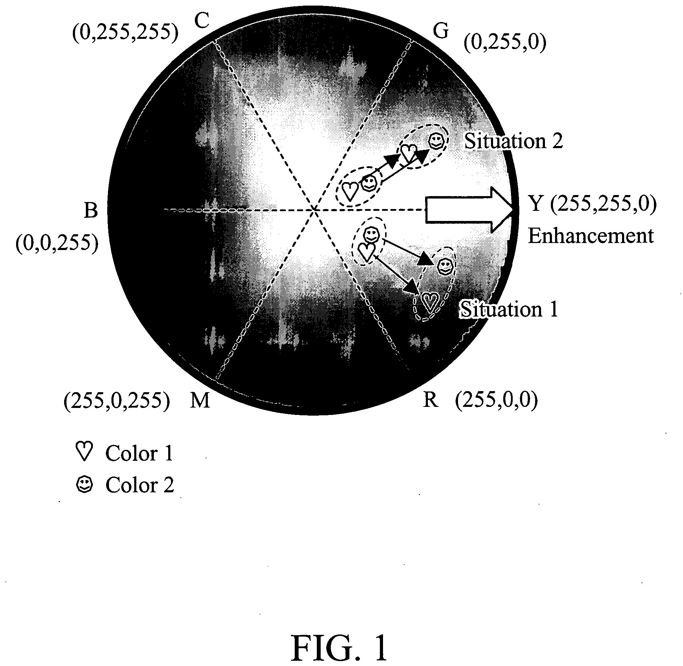

Most existing current color enhancement techniques typically boosts saturation of colors while keeping the colors' hue substantially unchanged. In the hue-saturation color wheel such as the one shown in Figure 1, a typical color enhancement technique moves colors outward on the radial direction as shown by the arrows. Essentially, the color enhancement algorithm increases the input images' dynamic range by increasing the saturation of the pixels.

The techniques used to enhance the color enhancement of an image are based upon modification of individual pixels. When the color of a pixel is enhanced to a new color, the conversion from the old color to the new color for each pixel is a predetermined fixed adjustment for the entire image or for the entire video.

By way of example, televisions have built-in color enhancement techniques to enhance unsaturated colors in certain content and let viewers set their color preferences. Because the human eye is very sensitive to the skin color, it is important for a color enhancement technique to render skin colors properly. It is also desirable for a color enhancement technique to separately adjust skin colors and non-skin colors using different characteristics.

Some color enhancement techniques have the capability of protecting skin colors. These techniques are typically are pixel-based. When the color of a pixel is enhanced to a new color, the conversion from the old color to the new color is fixed, and is not affected by other pixels. Because pixel-based color enhancement techniques with skin color protection cannot overcome the issue that the colors of skin and non-skin are highly overlapped, these techniques cannot effectively separately enhance skin and non-skin, and thus they can only protect all skin colors in the image not to be enhanced.

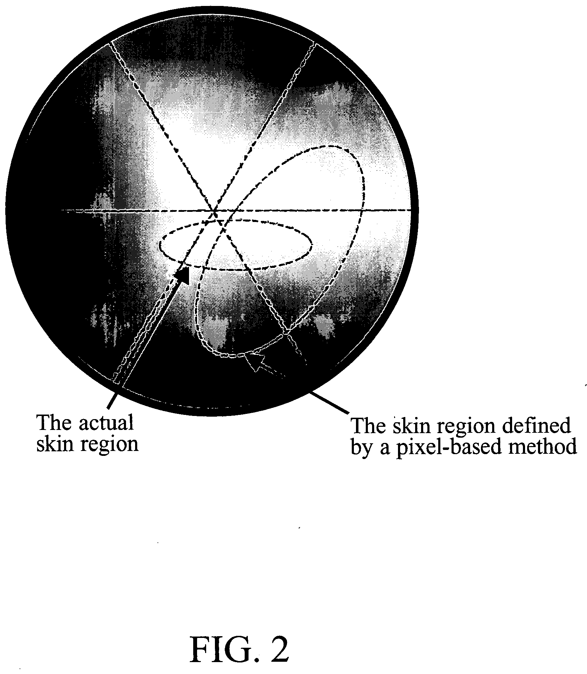

The pixel-based algorithms do not work effectively. Specifically, to avoid generating visible contouring artifacts in the areas of an image where skin and neighboring non-skin colors are mixed, both the skin color region in the color space and the gradual transition region between the skin color region and the non-skin color region have to be set very wide. Typically, the skin color and transition regions cover nearly half of the color gamut, as illustrated in Figure 2. On the other hand, some true skin colors are missed in the skin color region and therefore remain unprotected. Consequently, many non-skin colors are improperly protected while many skin colors are improperly enhanced by the enhancement techniques.

US 2003/0043394 A1 describes an image processing apparatus, image processing method, image processing program recording medium, color adjustment method, color adjustment device and color adjustment control program recording medium carrying out specified image processing operations if an object pixel is judged to belong to a specified region.

US 2003/0108245 A1 describes a method and system for improving an image characteristic based on image content generating a believe map corresponding spatially to the image pixels.

The document Kramberger I.: "Real-time skin feature identification in a time-sequential video stream", OPTICAL ENGINEERING SPIE USA, vol. 44, no. 4, April 2005 (2005-04), pages 47201-1, XP 002464894 ISSN: 0091-3286 describes real time skin feature identification in a time-sequential video stream using skin color identification and skin feature homogenization.

EP 1 453 002 A2 describes enhancing portrait images that are processed in a batch mode detecting different regions of an image based on facially relevant characteristics and executing enhancement filters on particular regions.

GB 2 388 737 A relates to determining which image enhancement operation is to be performed based on pixel color. The method disclosed receives an input pixel and a pixel array of surrounding pixels, identifies a color of the pixel array to facilitate processing the input pixel and the pixel array associated with the image and locates the color and a corresponding image enhancement operation in a color lookup table. For example, green pixels can be sharpened and flesh tone pixels can be smoothed.

US 2005/0281458 A1 relates to a method of reducing noise in a color filter array encoded image. Following capturing of an image of a scene by an image sensor, such captured image is used to provide a color filter array encoded image. This color filter array encoded image is low-passed filtered, providing a base image and a residual image. The base and residual image are processed differently: The base image is processed to provide a full color fully processed base image, whilst the residual image is converted using color filter array interpolation to provide a full color residual image. Then, the full color fully processed base image and the full color residual image are combined again to provide a noise reduced fully processed image.

The problem is solved by a method for enhancing the color of an image to be displayed on a display according to claim 1 and a color enhancement system according to claim 16.

SUMMARY OF THE INVENTION

In order to achieve the foregoing object, the method for enhancing the color of an image to be displayed on a display is arranged so as to include the steps of:

(a) receiving an image having a plurality of pixels where each of the pixels has a plurality of color components;
(b) filtering the image with a spatial filter to define regions including generally skin-tones as the skin-tone regions;
(c) enhancing the skin-tone regions in such a manner that the dynamic range of the skin tone regions is increased; and
(d) modifying the filtered image with the non-skin-tone regions of the image to obtain a modified image that includes the non-skin-tone regions and the filtered skin-tone regions.

According to the foregoing method, the image as received is filtered by the spatial filter to define the skin-tone regions, and the skin-tone regions are enhanced, and modifying (adding) the filtered image with (to) the non-skin regions of the image. With this method, as the spatial information is used to define the skin-tone regions to be subjected to the enhancement process, artifacts in an overall modified image can be reduced.

In order to achieve the foregoing object, the method for enhancing the color of an image to be displayed on a display, is arranged so as to include the steps of:

(a) receiving an image having a plurality of pixels where each of the pixels has a plurality of color components;
(b) filtering each of the plurality of color components with a sigma filter to obtain a base image primarily having low frequency components;
(c) modifying the input image based upon the base image to obtain a residual image primarily having high frequency components;
(d) filtering the base image with a filter to determine potential skin colors and use pixel-based color enhancement technique to obtain an enhanced base image in such a manner that the dynamic range of the base image is increased; and
(e) modifying the enhanced base image based upon the residual image to obtain an enhanced image that includes the high frequency components (higher frequency content) of the image.

According to the foregoing method, the image as received is divided into the base image primarily having low frequency components and the residual image primarily having high frequency components using the sigma filter, and the skin tone regions in the base image primary having low frequency components and few details, noise, and artifacts are subjected to the enhancement process using the filter .in such a manner that the dynamic range of the base image is increased. The enhanced base image and the non-enhanced residual image are then combined back into a single image.

In order to achieve the foregoing object, the method for color gamut mapping the color of an image to be displayed on a display, characterized by comprising the steps of:

(a) receiving an image having a plurality of pixels where each of the pixels has a plurality of color components;
(b) filtering the image with a spatial filter to define regions including generally skin-tones as the skin-tone regions;
(c) enhancing the skin-tone regions in such a manner that the dynamic range of the skin tone regions is increased; and
(d) modifying the filtered image with the non-skin-tone regions of the image to obtain a modified image that includes the non-skin-tone regions and the filtered skin-tone regions.

According to the foregoing method, the image as received is divided into the base image primarily having low frequency components and the residual image primarily having high frequency components using the sigma filter, and the skin tone regions in the base image primary having low frequency components and few details, noise, and artifacts are subjected to the enhancement process using the filter .in such a manner that the dynamic range of the base image is increased. The enhanced base image and the non-enhanced residual image are then combined back into a single image.

The foregoing method adopting the two-channel decomposition technique offers the effect of enhancing noise and artifacts to be reduced while enhancing colors.

In order to achieve the foregoing object, the color adjusting system for adjusting the color of an image to be displayed on a display, adopting the foregoing method of the present invention is characterized by comprising the steps of:

a user interface presented on a computer screen that provides a first adjustment mechanism and a second adjustment mechanism,

wherein the first adjustment mechanism includes a first flesh tone adjustment mechanism that adjusts the saturation of flesh tones, and the second adjustment mechanism includes a second non-flesh tone adjustment mechanism that adjusts the saturation of non-flesh tones.

In order to achieve the foregoing object, the color enhancement system, is arranged so as to include the steps of:

a sigma filter for filtering an input image having a plurality of pixels where each of the pixels has a plurality of color components to obtain a base image primarily having low frequency components;

a subtraction section which subtracts the base image from the input image to obtain a residual image primarily having high frequency components;

an image-driven nonlinear low pass filter for filtering the base image to determine potential skin colors;

a color enhancement section for enhancing the base image to obtain an enhanced image in such a manner that the dynamic range of the base image is increased; and

an addition section which combine the enhanced base image with the residual image containing the high frequency components.

Additional objects, features, and strengths of the present invention will be made clear by the description below. Further, the advantages of the present invention will be evident from the following explanation in reference to the drawings.

BRIEF DESCRIPTION OF THE DRAWINGS

FIG. 1 illustrates two adjacent colors in the hue-saturation color wheel that are not adjacent in the wheel after color enhancement.

FIG. 2 illustrates the actual skin color region and the skin region defined by a pixel based technique in a color wheel.

FIG. 3 illustrates a block diagram of the proposed technique.

FIG. 4 illustrates a look up table of skin color.

FIG. 5 illustrates a block diagram of an image driven non-linear low pass filter.

FIG. 6 illustrates a flow chart of color enhancement using skin color likelihood map.

FIG. 7 illustrates an input-output relationship of a coring process.

FIG. 8 illustrates a user interface adopted in the color adjusting system of the present invention.

FIG. 9 illustrates a color gamut mapping technique.

DESCRIPTION OF THE EMBODIMENTS

An observation was made that a typical pixel based color enhancement technique results in two similar colors before enhancement being modified to different values that are significantly less similar after enhancement. Figure 1 illustrates two different situations. Situation 1 illustrates the case when two colors are similar but have different hues, and situation 2 illustrates the case when two colors have the same hue and similar saturations.

In both situations, the two colors are close to each other in the color wheel before color enhancement. The two colors are spaced significantly apart from each other in the color wheel after color enhancement, indicating that the two enhanced colors are less similar after enhancement than they were before enhancement.

Single pixel-based color enhancement techniques also enhance artifacts while it enhances colors. The pixels in spatial flat areas of the non-enhanced image tend to have similar colors, and the differences among the similar colors are not very visible to the viewer. Because the pixel-based color enhancement techniques enlarge the differences of similar colors, the resulting differences of the enhanced image may become very visible, and consequently a flat area of the image before enhancement may not be very flat anymore after enhancement. Specifically, pixel-based color enhancement techniques are prone to amplifying noise that is otherwise generally unobservable in the flat area to become readily observable after color enhancement. Also, the pixel-based color enhancement technique tends to amplify and generate quantization artifacts in the smooth regions before enhancement that become relatively rough after enhancement. In addition, amplifying compression artifacts that are generally unobservable in the non-enhanced image become generally noticeable after enhancement. The compression artifacts include, for example, contours, which are typically due to insufficient bit-depth, blocky artifacts, which are common for block-based compression schemes, and ringing artifacts, which are due to loss of high frequency caused by compression.

In order to reduce the artifacts resulting from image enhancement, a modified technique may incorporate spatial information with the color enhancement. In addition, the spatial information may be obtained using multi-channel or two-channel decomposition of the image. More specifically, the preferred technique may decompose an image into a base image and a residual image. The base image may incorporate a pixel-based color enhancement technique. The color enhanced base image and the non-enhanced residual image are then combined back into a single image.

The color enhancement technique for the base image results in an increased dynamic range for an image, and as a result tends to increase the noise and artifacts that are in the image, which are generally not observable at the lower dynamic range. Accordingly, it is desirable to reduce the generation of artifacts while enhancing the color of the image with an increased dynamic range. While decreasing the generation of artifacts in the increased dynamic range image, the technique should also preserve image details which are generally high frequency components in nature and akin to 'noise'.

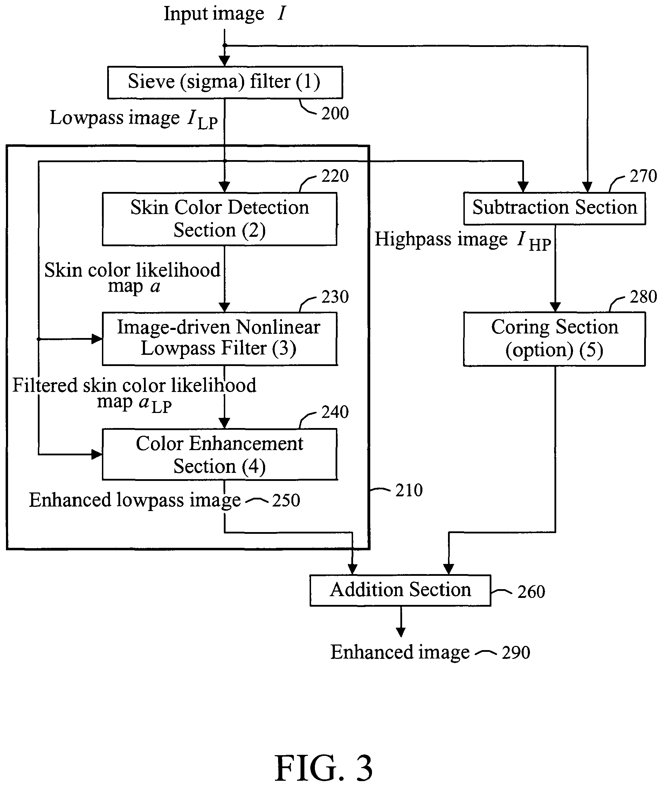

The overall block-diagram of the preferred color enhancement system in accordance with one embodiment of the present invention is explained with reference to the block diagram of Figure 3.

The color enhancement system of the present invention adopts the two-channel decomposition technique to reduce enhancing noise and artifacts while enhancing colors. As shown in Figure 3, the color enhancement system of the present embodiment includes a spatial filter 200, an enhancement path 210, a subtraction section 270, a coring section 280 and an addition section 260. Specifically, the input image is first decomposed into lowpass image (e.g., base image) and highpass image $I_{HP}$ (e.g., residual image) by the spatial filter 200, preferably sigma filter. The lowpass image, containing few details or artifacts, goes through the enhancement path 210. The enhancement path 210 has a skin color detection section 220, an image-driven non-linear lowpass filter 230, and a color enhancement section 240. The highpass image $I_{HP}$ is formed by the subtraction section 270 where the lowpass image $I_{LP}$ is subtracted from the original image. The highpass image $I_{HP}$, containing details, noise, and artifacts, does not go through the enhancement path 210 and will be added back to the color enhanced lowpass image 250 to generate the enhanced image 290. Therefore, the noise in the highpass image $I_{HP}$ is not enhanced in the same manner. In addition, the highpass image $I_{HP}$ can go through coring processing by the coring section 280 to reduce details, noise, and artifacts in the high frequency components (higher frequency content). The details of each component in the block-diagram are discussed as follows.

The sigma filter 200 decomposes the input image into the lowpass image $I_{LP}$ and highpass images $I_{HP}$. A suitable sigma filter is published by the non-patent document 1 [Lee (J.S. Lee, "Digital image enhancement and noise filtering by use of local statistics,"in IEEE Trans. Pattern Analysis and Machine Intelligence, Vol. PAMI-2, No. 2, pp. 165-168, March, 1980)]. The sigma filter utilizes a 1-D or 2-D rectangular window, where the current pixel (pixel of interest) I(x,y) is at the center of the window. The sigma filter 200 compares all the pixels I(i,j) in the window E with the central pixel I(x,y), and averages those pixels whose value differences with the central pixel I(x,y) is within a threshold T. Because this filter drops pixels that are not within the threshold T, one may refer to this as a sigma filter. The sigma filter is a nonlinear filter. Mathematically, the output of the sigma filter, $I_{LP}(x,y)$, is calculated by:

$$I_{LP}(x,y) = \frac{\displaystyle\sum_{(i,j)\in E \& |I(i,j)-I(x,y)|<T} I(i,j)}{N(x,y)} \qquad (1)$$

where E is the window; $N(x,y)$ is the count of the pixels in E that satisfy the condition of $|I(i,j)-I(x,y)|<T$. The parameters of the sigma filter, the widow E and the threshold T, are preferably chosen empirically.

The sigma filter generates the lowpass image $I_{LP}$, and the highpass image is obtained by subtraction 270. Because the sigma filter is a smoothing filter preserving sharp edges, the lowpass image generated by a sigma filter contains few details but contains sharp edges, and the highpass image contains details/noises/artifacts but few sharp edges.

The skin color detection 220 uses a 3D lookup table (LUT) to generate a skin color likelihood map. The three dimensions of the LUT are R, G and B. Each element of the LUT is a scale from 0 to 1 to indicate the likelihood that a color belongs to skin colors. The LUT is built by training, using training set where skin colors are manually segmented. Every pixel of the lowpass image can be given a skin color likelihood score by the LUT and the whole image forms a skin color likelihood map $a$.

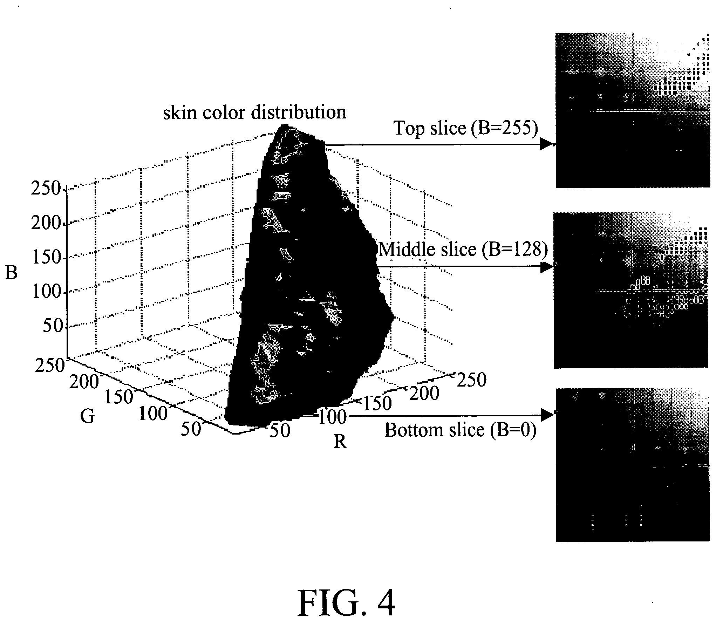

Assuming that R, G and B inputs are 8 bits, the size of 3D LUT is 256x256x256, which is costly to implement directly in expensive hardware. A LUT with that size is also tedious to train. Therefore, 33x33x33 3D LUT is preferably used. The 33 levels of each dimension are 0, 8, 16, 24, 32, 40, 48, 56, 64, 72, 80, 88, 96, 104, 112, 120, 128, 136, 144, 152, 160, 168, 176, 184, 192, 200, 208, 216, 224, 232, 240, 248, 255. A 3D interpolation algorithm, such as tri-linear interpolation, is used to fill all the missing points in the 3D 256x256x256 grid. The 33x33x33 LUT is illustrated in Figure 4.

The skin colors and non-skin colors are highly overlapped in the sense that any skin colors are not exclusively used by skins and non-skin colors are not exclusively used by non-skin objects either. Consequently, the skin color likelihood map of the input image generated by the above LUT can not avoid misses.

To correct some misses in the skin color likelihood map, one may use spatial information by applying an image-driven nonlinear lowpass filter to the skin color likelihood map in the preferred algorithm. The filter is motivated by the following two facts:

  (a) The pixels that are spatially close likely have similar skin color likelihood scores;
  (b) The pixels that are close in the color space likely have similar skin color likelihood scores.

Mathematically, the image-driven nonlinear lowpass filter may be defined as

$$a_{LP}(x,y) = \frac{\sum_{(i,j)\in E \& |R(i,j)-R(x,y)|<T \& |G(i,j)-G(x,y)|<T \& |B(i,j)-B(x,y)|<T} a(i,j)}{N(x,y)} \qquad (2)$$

In the above equation, $E$ is the window; $a(i,j)$ is the skin color likelihood score at $(i, j)$. $R(i, j)$, $G(i, j)$, and $B(i, j)$ define the colors at $(i, j)$. The spatial proximity is defined by window $E$. The pixels in $E$ are considered to be spatially close to the pixel at $(x, y)$. The color-space proximity is defined by threshold $T$. The pixels' $R$, $G$ and $B$ differences with the pixel at $(x, y)$ are all below $T$ are considered to be close in the color space. $N(x,y)$ is the count of the qualified pixels in E that are both spatially close and color-wisely close.

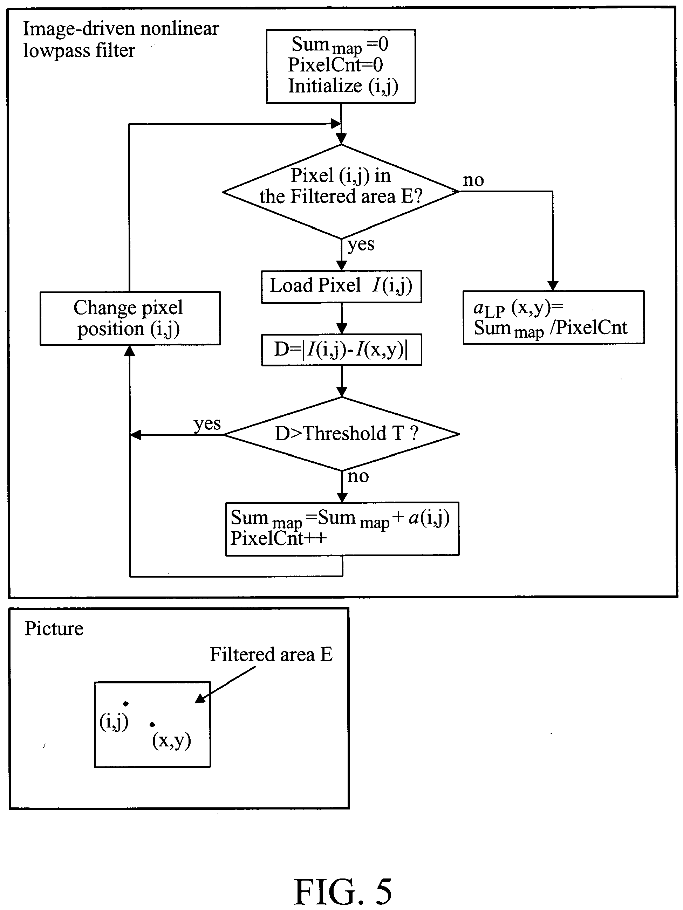

The image-driven nonlinear lowpass filter is a variation of the sigma filter. The input of the filter is the skin color likelihood map of the image, but the selection of pixels for averaging is based on the image itself. The spatially close and color-wisely close pixels tend to have the similar skin color likelihood, and their likelihood scores, not there image colors, are averaged. The flow-chart of this filter is shown in Figure 5.

A pixel with colors defined by $[R(x, y), G(x, y), B(x, y)]$ in the lowpass image is enhanced using a pixel-based color enhancement algorithm with two different sets of parameters, one set for skin colors, and the other for non-skin colors. Two enhanced results from two different parameter sets, $[Rs(x, y), Gs(x, y), Bs(x, y)]$ and $[R_{ns}(x, y), G_{ns}(x, y), B_{ns}(x, y)]$ are mixed linearly according to its skin color likelihood score $a_{LP}(x, y)$ to $[R_{EN}(x, y), G_{EN}(x, y), B_{EN}(x, y)]$. Specifically, the mixing equations may be

$$R_{EN}(x,y)=a_{LP}(x,y)R_s(x,y)+(1-a_{LP}(x,y))\ R_{ns}(x,y)$$

$$G_{EN}(x,y)=a_{LP}(x,y)G_s(x,y)+(1-a_{LP}(x,y))\ G_{ns}(x,y)$$

$$B_{EN}(x,y)=a_{LP}(x,y)B_s(x,y)+(1-a_{LP}(x,y))\ B_{ns}(x,y)$$

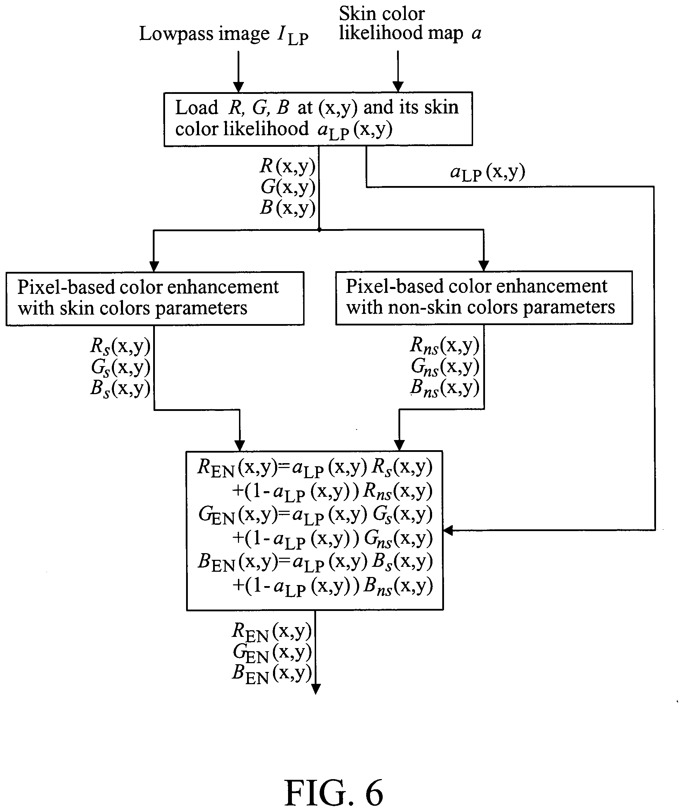

The block-diagram is shown in Figure 6. Any pixel-based technique can be used for color enhancement.

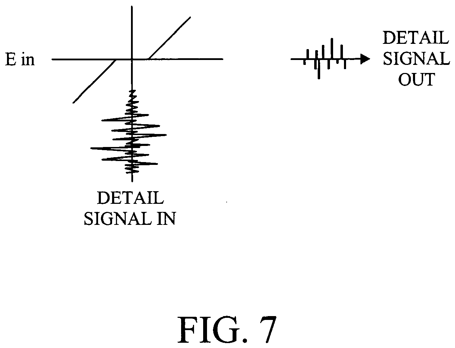

The highpass image contains details, noise and artifacts. As an option, the highpass image can go through a coring process by the coring section 280 to reduce details, noise, and artifacts in the high frequency components (higher frequency content). The input-output relationship of a coring processing is shown in Figure 7.

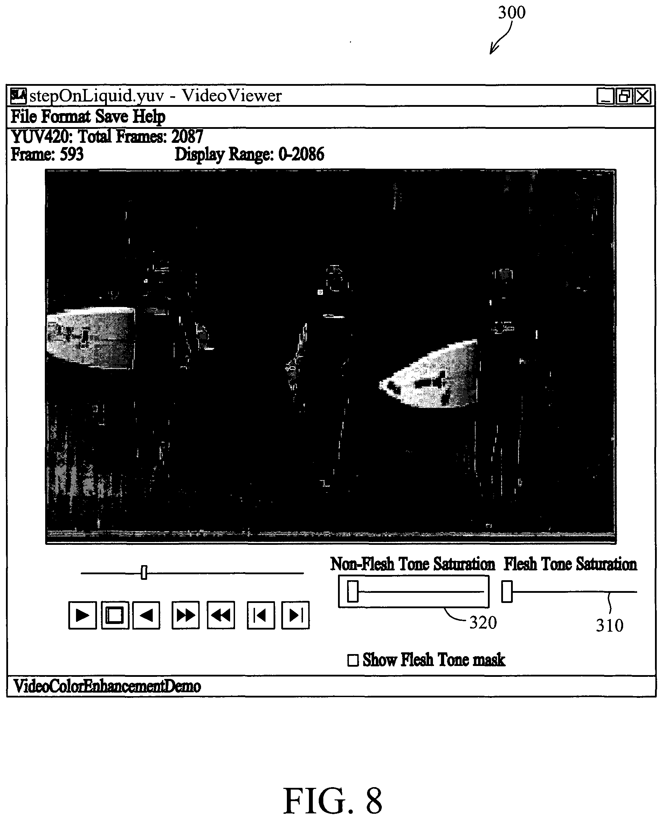

One example of the user interface of the embodiment of the preferred embodiment is shown in Figure 8. The interface has two sliders The interface 300 has two sliders, i.e., the flesh tone saturation slider 310 (First Adjustment Mechanism, First Flesh Tone Adjustment Mechanism) and the second non-flesh tone saturation slider 320 (Second Adjustment Mechanism, Second Non-Flesh Tone Adjustment Mechanism) to let viewers separately adjust the saturation levels of the skin colors ("Flesh Tone Saturation") and non-skin colors ("Non-flesh Tone Saturation"). Although this example only shows the separate saturation adjustments, the preferred embodiment allows other separate parameter adjustments as well, such as hue and/or brightness.

The same idea in the color enhancement technique is may be used in a color gamut mapping technique to map pictorial data from a small color gamut to a big color gamut. Next-generation LCD TVs may feature a big color gamut such as the NTSC gamut. On the other hand, in the foreseeable future, the contents will still be in the HDTV/sRGB format, which is 70% of the NTSC gamut in the XYZ color space. Directly displaying the RGB values defined in the small HDTV/sRGB gamut on the TV with the big NTSC gamut will damage skin colors, resulting in red color shadows, color clipping, etc.

As the color enhancement technique, the color gamut mapping algorithm decomposes the input image into lowpass and highpass images using the same sigma filter. The same skin color likelihood map is generated and processed in the color gamut mapping algorithm. The color mapping is only applied to the lowpass mage as the color enhancement algorithm. Specifically, first, a pixel with colors defined by $[R(x, y), G(x, y), B(x, y)]$ in the lowpass image is mapped using two sets of parameters, one parameter set preserving colors, and the other parameter set expanding colors to the extra area of the big color gamut. Then, the two mapped results $[R_s(x, y), G_s(x, y), B_s(x, y)]$ and $[R_{ns}(x, y), G_{ns}(x, y), B_{ns}(x, y)]$ are combined linearly according to its skin color likelihood score $a_{LP}(x, y)$ to $[R_{EN}(x, y), G_{EN}(x, y), B_{EN}(x, y)]$.

Specifically, the mixing equations still are

$$R_{EN}(x,y)=a_{LP}(x,y)R_s(x,y)+(1-a_{LP}(x,y))\ R_{ns}(x,y)$$

$$G_{EN}(x,y)=a_{LP}(x,y)G_s(x,y)+(1-a_{LP}(x,y))\ G_{ns}(x,y)$$

$$B_{EN}(x,y)=a_{LP}(x,y)B_s(x,y)+(1-a_{LP}(x,y))\ B_{ns}(x,y)$$

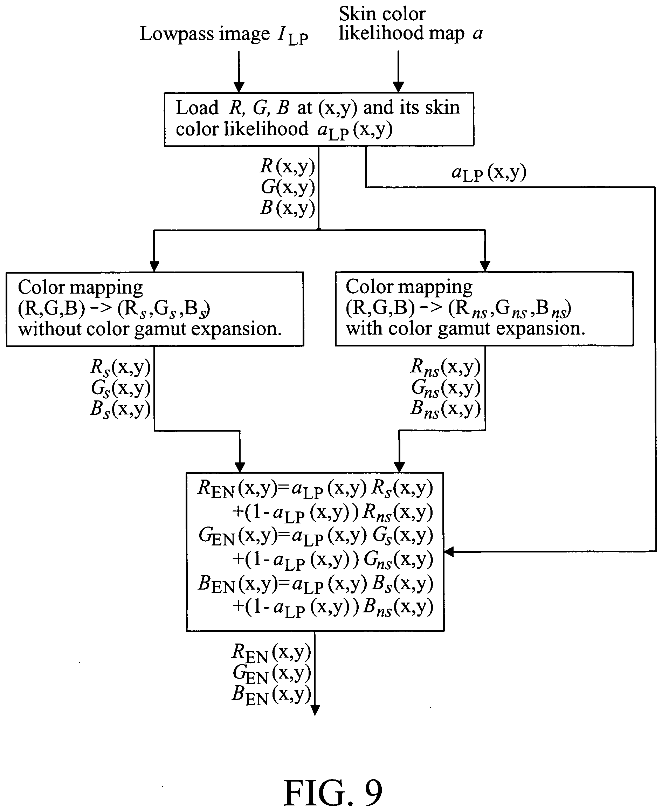

The block-diagram of lowpass image processing is shown in Figure 9.

Finally, the highpass image is added back to generate the color-gamut-mapped image.

As described, the method for enhancing the color of an image to be displayed on a display of the present invention is characterized by comprising the steps of

(a) receiving an image having a plurality of pixels where each of the pixels has a plurality of color components;
(b) filtering the image with a spatial filter to define regions including generally skin-tones as the skin-tone regions;
(c) enhancing the skin-tone regions in such a manner that the dynamic range of the skin tone regions is increased; and
(d) modifying the filtered image with the non-skin-tone regions of the image to obtain a modified image that includes the non-skin-tone regions and the filtered skin-tone regions.

The foregoing method preferably is arranged the special filter which defines the skin-tone regions is a spatial low pass filter.

The foregoing method preferably is arranged a resulting filtered image from the step (b) includes edges.

The foregoing method preferably is arranged the spatial filter which defines the skin-tone regions is a sigma filter.

The foregoing method preferably is arranged the image to be filtered by the spatial filter includes a region defined around a pixel of interest.

The foregoing method preferably is arranged the spatial filter determines pixels within the region that are sufficiently similar to the pixel of interest.

The foregoing method preferably is arranged in the step (b), a filtered skin color likelihood map by a nonlinear lowpass filter, which is generated using a 3D look-up table, is used to further define the skin-tone regions.

The foregoing method preferably is arranged in the step (b), the skin tone regions are defined by determining whether proximate pixels have skin-tones based on spatial characteristics.

The foregoing method preferably is arranged in the step (b), the skin tone regions are defined by determining whether proximate pixels have skin-tones based on color spatial characteristics.

The foregoing method preferably is arranged by the spatial filter, the image is separated into a base image and a residual image, wherein the base image is the filtered image having low frequency components (lower frequency content) and the residual image includes higher frequency components (higher frequency content).

As described the method for enhancing the color of an image to be displayed on a display, is arranged so as to include the steps of:

(a) receiving an image having a plurality of pixels where each of the pixels has a plurality of color components;
(b) filtering each of the plurality of color components with a sigma filter to obtain a base image primarily having low frequency components;
(c) modifying the input image based upon the base image to obtain a residual image primarily having high frequency components;
(d) filtering the base image with a filter to determine potential skin colors and use pixel-based color enhancement technique to obtain an enhanced base image in such a manner that the dynamic range of the base image is increased; and
(e) modifying the enhanced base image based upon the residual image to obtain an enhanced image that includes the high frequency components of the image.

The foregoing method preferably is arranged the residual image is further processed using a de-contouring technique.
The foregoing method preferably is arranged the low frequency components (lower frequency content) include edges.
The foregoing method preferably is arranged the high frequency components (higher frequency content) include high frequency details, noise, and artifacts.
The foregoing method preferably is arranged the image to be filtered by the sigma filter includes a region defined around a pixel of interest, and compares all the pixels in the region with the pixel of interest, and averages those pixels whose value differences with the pixel of interest is within a threshold.
The foregoing method preferably is arranged the threshold is based upon the content of the image.
As described, the method for color gamut mapping the color of an image to be displayed on a display, is arranged so as to include the steps of:

(a) receiving an image having a plurality of pixels where each of the pixels has a plurality of color components;
(b) filtering the image with a spatial filter to define regions including generally skin-tones as the skin-tone regions;
(c) enhancing the skin-tone regions in such a manner that the dynamic range of the skin tone regions is increased; and
(d) modifying the filtered image with the non-skin-tone regions of the image to obtain a modified image that includes the non-skin-tone regions and the filtered skin-tone regions.

As described, the color adjusting system for adjusting the color of an image to be displayed on a display adopting the foregoing method of the present invention may be arranged so as to include:

a user interface presented on a computer screen that provides a first adjustment mechanism and a second adjustment mechanism,
wherein the first adjustment mechanism includes a first flesh tone adjustment mechanism that adjusts the saturation of flesh tones, and the second adjustment mechanism includes a second non-flesh tone adjustment mechanism that adjusts the saturation of non-flesh tones.

As described, the color enhancement system of the present invention may be arranged so as to include:

a sigma filter for filtering an input image having a plurality of pixels where each of the pixels has a plurality of color components to obtain a base image primarily having low frequency components;
a subtraction section which subtracts the base image from the input image to obtain a residual image primarily having high frequency components;
an image-driven nonlinear low pass filter for filtering the base image to determine potential skin colors;
a color enhancement section for enhancing the base image to obtain an enhanced image in such a manner that the dynamic range of the base image is increased; and
an addition section which combine the enhanced base image with the residual image containing the high frequency contents.

The foregoing system preferably is arranged a coring section is further provided for coring the residual image to reduce details, noise, and artifacts in the higher frequency content.
As described, the method for enhancing the color of an image to be displayed on a display may be arranged so as to include the steps of:

(a) receiving an image having a plurality of pixels where each of the pixels has a plurality of color components;

(b) filtering the image with a spatial filter to define regions including generally skin-tones in such a manner that the skin-tone regions of the image are enhanced in such a manner that the dynamic range of the skin tone regions is increased;

(c) modifying the filtered image with the non-skin-tone regions of the image to obtain a modified image that includes the non-skin-tone regions and the filtered skin-tone regions.

The foregoing method preferably is arranged such that the skin-tone regions are defined by a spatial low pass filter.

The foregoing method preferably is arranged the filtered image includes edges.

The foregoing method preferably is arranged the filtered image is defined using a sigma filer.

The foregoing method preferably is arranged the spatial filter includes a region defined around a pixel of interest.

The foregoing method preferably is arranged such that the spatial filter determines pixels within the region that are sufficiently similar to the pixel of interest.

The foregoing method preferably is arranged such that the filtering includes a look-up table to further define the skin-tone regions.

The foregoing method preferably is arranged the filtering includes a spatial characteristic that determines whether proximate pixels have the skin-tones.

The foregoing method preferably is arranged the filtering includes a color space characteristic that determines if proximate pixels have the skin-tones.

The foregoing method preferably is arranged the image is separated into a base image and a residual image, the base image is the filtered and the residual image includes the higher frequency content.

The foregoing method preferably is arranged the lower frequency content is separated by edges.

The foregoing method preferably is arranged the higher frequency content includes high frequency details, noise, and artifacts.

The foregoing method preferably is arranged the filter includes a threshold.

The foregoing method preferably is arranged the threshold is based upon the content of the image.

As described, the method for enhancing the color of an image to be displayed on a display of the present invention may be arranged so as to include the steps of:

(a) receiving an image having a plurality of pixels where each of the pixels has a plurality of color components;

(b) filtering each of the color components of the plurality of components with a sigma filter to obtain a base image wherein the base image is characterized by having primarily low frequency components of the image;

(c) modifying the input image based upon the base image to obtain a residual image wherein the residual image is characterize by having primarily high frequency components of the image;

(d) filtering the base image with a filter to determine potential skin colors and use pixel-based color enhancement technique to obtain an enhanced base image

in such a manner that the dynamic range of the base image is increased; and

(e) modifying the enhanced base image based upon the residual image to obtain an enhanced image that includes the high frequency content of the image.

The foregoing method preferably is arranged the residual image is further processed using a decontouring technique.

As described, the method for color gamut mapping the color of an image to be displayed on a display of the present invention may be arranged so as to include the steps of:

(a) receiving an image having a plurality of pixels where each of the pixels has a plurality of color components;

(b) filtering the image with a spatial filter to define regions including generally skin-tones in such a manner that the skin-tone regions of the image are enhanced in such a manner that the dynamic range of the skin tone regions is increased; and

(c) modifying the filtered image with the non-skin-tone regions of the image to obtain a modified image that includes the non-skin-tone regions and the filtered skin-tone regions.

As described, the system adjusting an image, of the present invention may be arranged so as to include:

(a) a user interface presented on a computer screen that provides a first and a second adjustment mechanism;

(b) the interface providing a first non-flesh tone adjustment mechanism that adjusts the saturation of non-flesh tones; and

(c) the interface providing a second flesh tone adjustment mechanism that adjusts the saturation of flesh tones.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

**Claims**

1. A method for enhancing the color of an image to be displayed on a display, comprising the subsequent steps of:

   (a) receiving an image having a plurality of pixels where each of said pixels has a plurality of color components;
   (b) filtering said received image with a spatial non-linear low-pass filter (200) so that the spatial filter (200) separates said received image into a base image including low frequency components obtained by the filtering with the spatial filter (200) and a residual image including high frequency components;
   (c) defining (220) regions including skin tones in said base image as the skin tone regions by using a 3D lookup table and generating a skin color likelihood map;
   (d) filtering (230) said skin likelihood map by using an image-driven non-linear low-pass filter;
   (e) enhancing the colors of pixels in said skin-tone regions in said base image in such a manner that the dynamic range of the colors of pixels in said skin tone regions is increased so as to obtain an enhanced base image including the enhanced skin-tone regions and a non-skin-tone regions, wherein the residual image is maintained or only undergoing a coring process to reduce details, noise and artifacts;
   (f) adding said enhanced base image to said residual image to obtain an enhanced image that includes said non-skin-tone regions and said enhanced skin-tone regions.

2. The method of claim 1, wherein:

   said spatial filter (200) is a spatial low pass filter.

3. The method of claim 1, wherein said base image includes edges.

4. The method of claim 1, wherein said spatial filter (200) is a sigma filter.

5. The method of claim 1, wherein said image to be filtered by said spatial filter (200) includes a region defined as a 1-D or a 2-D rectangular window whose center corresponds to a pixel of interest.

6. The method of claim 1, wherein in said step (c), a filtered skin color likelihood map by a non-linear low pass filter (230), which is generated using a 3D look-up table, is used to further define said skin-tone regions.

7. The method of claim 1, wherein in said step (c), said skin tone regions are defined by determining whether proximate pixels have skin-tones.

8. The method of claim 1, wherein
   the step (b) includes the step of filtering each of said plurality of color components with said spatial filter (200) which is a sigma filter to obtain said base image primarily having low frequency components;
   the step (b) further includes the step of modifying said received image based upon said base image to obtain said residual image primarily having high frequency components;
   the step (c) further includes the step of modifying said enhanced base image based upon said residual image to obtain an enhanced image that includes said high frequency components of said image.

9. The method of claim 8 wherein said residual image is further processed using a de-contouring technique.

10. The method of claim 8, wherein wherein said low frequency components include edges.

11. The method of claim 8, wherein wherein said high frequency components include high frequency details, noise, and artifacts.

**12.** The method of claim 8, wherein said image to be filtered by said sigma filter includes a region defined as a 1-D or a 2-D rectangular window whose center corresponds to a pixel of interest, and compares all the pixels in the region with said pixel of interest, and averages those pixels whose value differences from the pixel of interest is within a threshold.

**13.** The method of claim 12, wherein said threshold is based upon the content of said image.

**14.** The method of claim 1, used to color gamut map the color of an image to be displayed on a display.

**15.** A color enhancement system, comprising:

a sigma filter arranged to filter an input image having a plurality of pixels where each of said pixels has a plurality of color components to obtain a base image primarily having low frequency components;
a subtraction section (270) arranged to subtract said base image from said input image to obtain a residual image primarily having high frequency components;
a 3D lookup table for generating a skin color likelihood map for the base image;
an image-driven nonlinear low pass filter (230) arranged to receive the skin color likelihood map and to thereby filter said base image to determine potential skin colors;
a color enhancement section arranged to enhance the color of pixels in said base image to obtain an enhanced base image in such a manner that the dynamic range of the color in said base image is increased, while the residual image is maintained, or only undergoing a coring process to reduce details, noise and artifacts;
an addition section (260) arranged to combine said enhanced base image with said maintained residual image containing said high frequency components.

**16.** The color enhancement system of claim 15, further comprising:

a coring section (280) arranged to core said residual image to reduce details, noise, and artifacts in said higher frequency content.

**17.** The color enhancement system of claim 15, further comprising:

a user interface presented on a computer screen that provides a first adjustment mechanism and a second adjustment mechanism, wherein the first adjustment mechanism includes a first flesh tone adjustment mechanism that adjusts the saturation of flesh tones, and the second adjustment mechanism includes a second non-flesh tone adjustment mechanism that adjusts the saturation of non-flesh tones.

**Patentansprüche**

**1.** Verfahren zum Verstärken der Farbe eines Bildes, das auf einer Anzeige angezeigt werden soll, umfassend die nachfolgenden Schritte:

(a) Empfangen eines Bildes mit einer Vielzahl von Pixel, wo jedes der Pixel eine Vielzahl von Farbkomponenten aufweist;
(b) Filtern des empfangenen Bildes mit einem nicht-linearen Tiefpass-Ortsfilter (200), so dass der Ortsfilter (200) das empfangene Bild in ein Basisbild, das durch das Filtern mit dem Ortsfilter (200) erhaltene Niederfrequenzkomponenten enthält, und ein Restbild trennt, das Hochfrequenzkomponenten enthält;
(c) Definieren (220) von Gebieten, die Hauttöne in dem Basisbild enthalten, als die Hauttongebiete, indem eine 3D-Nachschlagetabelle verwendet und eine Hautfarben-Wahrscheinlichkeitskarte erzeugt wird;
(d) Filtern (230) der Haut-Wahrscheinlichkeitskarte, indem ein bildgetriebener nicht-linearer Tiefpassfilter verwendet wird;
(e) Verstärken der Farben von Pixel in den Hauttongebieten in dem Basisbild auf solch eine Weise, dass der dynamische Bereich der Farben von Pixel in den Hauttongebieten erhöht wird, um ein verstärktes Basisbild zu erhalten, das die verstärkten Hauttongebiete und Nicht-Hauttongebiete enthält, wobei das Restbild beibehalten wird oder nur einen Entfernungsprozess durchläuft, um Details, Rauschen und Artefakte zu reduzieren;
(f) Addieren des verstärkten Basisbildes zu dem Restbild, um ein verstärktes Bild zu erhalten, das die Nicht-Hauttongebiete und die verstärkten Hauttongebiete umfasst.

2. Verfahren nach Anspruch 1, wobei:

der Ortsfilter (200) ein Tiefpass-Ortsfilter ist.

3. Verfahren nach Anspruch 1, wobei:

das Basisbild Kanten enthält.

4. Verfahren nach Anspruch 1, wobei:

der Ortsfilter (200) ein Sigmafilter ist.

5. Verfahren nach Anspruch 1, wobei:

das durch den Ortsfilter (200) zu filternde Bild ein Gebiet enthält, das als ein 1-D- oder ein 2-D-Rechteckfenster definiert ist, dessen Mitte einem Pixel von Interesse entspricht.

6. Verfahren nach Anspruch 1, wobei:

in dem Schritt (c) eine durch einen nicht-linearen Tiefpassfilter (230) gefilterte Hautfarben-Wahrscheinlichkeitskarte, die unter Verwendung einer 3D-Nachschlagetabelle erzeugt wird, verwendet wird, um die Hauttongebiete weiter zu definieren.

7. Verfahren nach Anspruch 1, wobei:

in dem Schritt (c) die Hauttongebiete definiert werden, indem bestimmt wird, ob nächste Pixel Hauttöne aufweisen.

8. Verfahren nach Anspruch 1, wobei:

der Schritt (b) den Schritt zum Filtern jeder der Vielzahl von Farbkomponenten mit dem Ortsfilter (200) einschließt, welcher ein Sigmafilter ist, um das Basisbild zu erhalten, das vor allem Niederfrequenzkomponenten aufweist; der Schritt (b) ferner den Schritt zum Modifizieren des empfangenen Bildes basierend auf dem Basisbild einschließt, um das Restbild zu erhalten, das vor allem Hochfrequenzkomponenten enthält; der Schritt (c) ferner den Schritt zum Modifizieren des verstärkten Basisbildes basierend auf dem Restbild enthält, um ein verstärktes Bild zu erhalten, das die Hochfrequenzkomponenten des Bildes enthält.

9. Verfahren nach Anspruch 8, wobei das Restbild unter Verwendung einer Dekonturierungstechnik weiter verarbeitet wird.

10. Verfahren nach Anspruch 8, wobei die Niederfrequenzkomponenten Kanten enthalten.

11. Verfahren nach Anspruch 8, wobei die Hochfrequenzkomponenten Details, Rauschen und Artefakte mit hohen Frequenzen enthalten.

12. Verfahren nach Anspruch 8, wobei das durch den Sigmafilter zu filternde Bild ein Gebiet enthält, das als ein 1-D- oder ein 2-D-Rechteckfenster definiert ist, dessen Mitte einem Pixel von Interesse entspricht, und all die Pixel in dem Gebiet mit dem Pixel von Interesse vergleicht und jene Pixel mittelt, deren Wertdifferenzen von dem Pixel von Interesse innerhalb einer Schwelle liegen.

13. Verfahren nach Anspruch 12, wobei die Schwelle auf dem Inhalt des Bildes basiert.

14. Verfahren nach Anspruch 1, das genutzt wird, um die Farbe eines auf einer Anzeige anzuzeigenden Bildes im Farbraum abzubilden.

**15.** Farbverstärkungssystem, umfassend:

einen Sigmafilter, der angeordnet ist, um ein Eingabebild mit einer Vielzahl von Pixel zu filtern, wo jedes der Pixel eine Vielzahl von Farbkomponenten aufweist, um ein Basisbild zu erhalten, das vor allem Niederfrequenzkomponenten aufweist;

einen Subtraktionsteil (270), der angeordnet ist, um das Basisbild von dem Eingabebild zu subtrahieren, um ein Restbild zu erhalten, das vor allem Hochfrequenzkomponenten enthält;

eine 3D-Nachschlagetabelle, um eine Hautfarben-Wahrscheinlichkeitskarte für das Basisbild zu erzeugen;

einen bildgetriebenen nicht-linearen Tiefpassfilter (230), der angeordnet ist, um die Hautfarben-Wahrscheinlichkeitskarte zu empfangen und um dadurch das Basisbild zu filtern, um potentielle Hautfarben zu bestimmen;

einen Farbverstärkungsteil, der angeordnet ist, um die Farbe von Pixel in dem Basisbild zu verstärken, um ein verstärktes Basisbild auf solch eine Weise zu erhalten, dass der dynamische Bereich der Farbe in dem Basisbild erhöht wird, während das Restbild beibehalten wird oder nur einen Entkernungsprozess durchläuft, um Details, Rauschen und Artefakte zu reduzieren;

einen Additionsteil (260), der angeordnet ist, um das verstärkte Basisbild mit dem beibehaltenen Restbild zu kombinieren, das die Hochfrequenzkomponenten enthält.

**16.** Farbverstärkungssystem nach Anspruch 15, ferner umfassend:

einen Entkernungsteil (280), der angeordnet ist, um das Restbild zu entkernen, um Details, Rauschen und Artefakte in dem Inhalt mit höheren Frequenzen zu reduzieren.

**17.** Farbverstärkungssystem nach Anspruch 15, ferner umfassend:

eine auf einem Computer-Bildschirm präsentierte Nutzerschnittstelle, die einen ersten Einstellungsmechanismus und einen zweiten Einstellungsmechanismus vorsieht, wobei der erste Einstellungsmechanismus einen ersten Mechanismus zur Einstellung von Fleischtönen enthält, der die Sättigung von Fleisch-Tönen einstellt, und der zweite Einstellungsmechanismus einen zweiten Mechanismus zur Einstellung von Nicht-Fleischtönen enthält, der die Sättigung von Nicht-Fleischtönen einstellt.

## Revendications

**1.** Procédé pour améliorer la couleur d'une image à afficher sur un dispositif d'affichage, comprenant les étapes suivantes :

(a) la réception d'une image présentant une pluralité de pixels où chacun desdits pixels présente une pluralité de composantes chromatiques ;

(b) le filtrage de ladite image reçue avec un filtre passe-bas non linéaire spatial (200) de sorte que le filtre spatial (200) sépare ladite image reçue en une image de base comportant des composantes basses fréquence obtenues par le filtrage avec le filtre spatial (200) et en une image résiduelle comportant des composantes hautes fréquences ;

(c) la définition (220) de régions comportant des carnations dans ladite image de base en tant que régions de carnation en utilisant une table de conversion 3D et en générant une carte de probabilité de carnation ;

(d) le filtrage (230) de ladite carte de probabilité de carnation en utilisant un filtre passe-bas non linéaire axé sur l'image ;

(e) l'amélioration des couleurs de pixels dans lesdites régions de carnation dans ladite image de base de sorte que la plage dynamique des couleurs des pixels dans lesdites régions de carnation est augmentée de manière à obtenir une image de base améliorée comportant les régions de carnation améliorées et des régions de non carnation, dans lequel l'image résiduelle est maintenue ou ne subit qu'un processus de noyautage pour réduire des détails, des bruits et des artefacts ;

(f) l'ajout de ladite image de base améliorée à ladite image résiduelle pour obtenir une image améliorée qui comporte lesdites régions de non carnation et lesdites régions de carnation améliorées.

**2.** Procédé selon la revendication 1, dans lequel :

ledit filtre spatial (200) est un filtre passe-bas spatial.

**3.** Procédé selon la revendication 1, dans lequel
ladite image de base comporte des contours.

**4.** Procédé selon la revendication 1, dans lequel
ledit filtre spatial (200) est un filtre sigma.

**5.** Procédé selon la revendication 1, dans lequel
ladite image à filtrer par ledit filtre spatial (200) comporte une région définie comme étant une fenêtre rectangulaire
1-D ou 2-D dont un centre correspond à un pixel d'intérêt.

**6.** Procédé selon la revendication 1, dans lequel
dans ladite étape (c), une carte de probabilité de carnation filtrée par un filtre passe-bas non linéaire (230), qui est
générée en utilisant une table de conversion 3D, est utilisée pour définir davantage lesdites régions de carnation.

**7.** Procédé selon la revendication 1, dans lequel
dans ladite étape (c), lesdites régions de carnation sont définies en déterminant si les pixels proches ont des tons
de chair.

**8.** Procédé selon la revendication 1, dans lequel
l'étape (b) comprend l'étape de filtrage de chacune de ladite pluralité de composantes chromatiques avec ledit filtre
spatial (200) qui est un filtre sigma pour obtenir ladite image de base présentant principalement des composantes
basses fréquences ;
l'étape (b) comprend en outre l'étape de modification de ladite image reçue sur la base de ladite image de base
pour obtenir ladite image résiduelle présentant principalement des composantes hautes fréquences ;
l'étape (c) comprend en outre l'étape de modification de ladite image de base améliorée sur la base de ladite image
résiduelle pour obtenir une image améliorée qui comporte lesdites composantes hautes fréquences de ladite image.

**9.** Procédé selon la revendication 8, dans lequel ladite image résiduelle est traitée ultérieurement en utilisant une
technique de suppression d'effet de contour.

**10.** Procédé selon la revendication 8, dans lequel
dans lequel lesdites composantes basses fréquences comportent des contours.

**11.** Procédé selon la revendication 8, dans lequel
dans lequel lesdites composantes hautes fréquences comportent des détails, des bruits et des artefacts hautes
fréquences.

**12.** Procédé selon la revendication 8, dans lequel
ladite image à filtrer par ledit filtre sigma comporte une région définie comme étant une fenêtre rectangulaire 1-D
ou 2-D dont un centre correspond à un pixel d'intérêt, et compare tous les pixels de la région avec ledit pixel d'intérêt,
et calcule la moyenne de ces pixels dont des différences de valeur par rapport au pixel d'intérêt sont inférieures à
un seuil.

**13.** Procédé selon la revendication 12,
dans lequel ledit seuil est basé sur le contenu de ladite image.

**14.** Procédé selon la revendication 1, utilisé pour cartographier en gamme de couleurs la couleur d'une image à afficher
sur un dispositif d'affichage.

**15.** Système d'amélioration de couleurs, comprenant :

un filtre sigma agencé pour filtrer une image d'entrée présentant une pluralité de pixels où chacun desdits pixels
présente une pluralité de composantes de couleur pour obtenir une image de base présentant principalement
des composantes basses fréquences ;
une section de soustraction (270) agencée pour soustraire ladite image de base de ladite image d'entrée pour
obtenir une image résiduelle présentant principalement des composantes hautes fréquences ;
une table de conversion 3D pour générer une carte de probabilité de carnation pour l'image de base ;
un filtre passe-bas non linéaire axé sur l'image (230) agencé pour recevoir la carte de probabilité de carnation et pour ainsi filtrer ladite image de base pour déterminer des tons de chair potentiels ;
une section d'amélioration de couleur agencée pour améliorer la couleur des pixels dans ladite image de base pour obtenir une image de base améliorée de sorte que la plage dynamique de la couleur dans ladite image de base est augmentée, alors que l'image résiduelle est maintenue, ou ne subit qu'un processus de noyautage pour réduire des détails, des bruits et des artefacts ;
une section d'addition (260) agencée pour combiner ladite image de base améliorée avec ladite image résiduelle maintenue contenant lesdites composantes hautes fréquences.

16. Système d'amélioration des couleurs selon la revendication 15, comprenant en outre :

une section de noyautage (280) agencée pour noyauter ladite image résiduelle pour réduire des détails, des bruits, et des artefacts dans ledit contenu haute fréquence.

17. Système d'amélioration des couleurs selon la revendication 15, comprenant en outre :

une interface utilisateur présentée sur un écran d'ordinateur qui fournit un premier mécanisme d'ajustement et un second mécanisme d'ajustement, dans lequel le premier mécanisme d'ajustement comporte un premier mécanisme d'ajustement de carnation qui ajuste la saturation des tons de chair, et le second mécanisme d'ajustement comporte un second mécanisme d'ajustement de non carnation qui ajuste la saturation des tons non de chair.

FIG. 1

The actual skin region

The skin region defined by a pixel-based method

FIG. 2

Input image $I$

Sieve (sigma) filter (1)

$\smallsetminus$ 200

Lowpass image $I_{LP}$

Skin Color Detection
Section (2)

$\diagup$ 220

Subtraction Section

$\diagup$ 270

Highpass image $I_{HP}$

Skin color likelihood
map $a$

Image-driven Nonlinear
Lowpass Filter (3)

$\diagup$ 230

Coring Section
(option) (5)

$\diagup$ 280

Filtered skin color likelihood
map $a_{LP}$

Color Enhancement
Section (4)

$\diagup$ 240

Enhanced lowpass image $\frown$ 250

$\frown$ 210

Addition Section $\frown$ 260

Enhanced image $\frown$ 290

FIG. 3

skin color distribution

Top slice (B=255)

Middle slice (B=128)

Bottom slice (B=0)

B

250
200
150
100
50

250
200
150
100
50

50 100 150 200 250

G

R

FIG. 4

EP 1 811 765 B1

Image-driven nonlinear lowpass filter

$Sum_{map} = 0$
$PixelCnt = 0$
Initialize (i,j)

Pixel (i,j) in the Filtered area E? — no

yes

Load Pixel $I$(i,j)

$D = |I(i,j) - I(x,y)|$

Change pixel position (i,j)

$a_{LP}(x,y) = Sum_{map}/PixelCnt$

D>Threshold T ? — yes / no

$Sum_{map} = Sum_{map} + a(i,j)$
$PixelCnt{+}{+}$

Picture

Filtered area E

(i,j)   (x,y)

FIG. 5

Lowpass image $I_{LP}$    Skin color
                          likelihood map $a$

Load $R$, $G$, $B$ at (x,y) and its skin
color likelihood $a_{LP}$(x,y)

$R$(x,y)
$G$(x,y)
$B$(x,y)

$a_{LP}$(x,y)

Pixel-based color enhancement
with skin colors parameters

Pixel-based color enhancement
with non-skin colors parameters

$R_S$(x,y)
$G_S$(x,y)
$B_S$(x,y)

$R_{ns}$(x,y)
$G_{ns}$(x,y)
$B_{ns}$(x,y)

$R_{EN}$(x,y)$=a_{LP}$(x,y)$R_S$(x,y)
$+(1-a_{LP}$(x,y)$)R_{ns}$(x,y)
$G_{EN}$(x,y)$=a_{LP}$(x,y)$G_S$(x,y)
$+(1-a_{LP}$(x,y)$)G_{ns}$(x,y)
$B_{EN}$(x,y)$=a_{LP}$(x,y)$B_S$(x,y)
$+(1-a_{LP}$(x,y)$)B_{ns}$(x,y)

$R_{EN}$(x,y)
$G_{EN}$(x,y)
$B_{EN}$(x,y)

# FIG. 6

E in

DETAIL
SIGNAL IN

DETAIL
SIGNAL
OUT

# FIG. 7

EP 1 811 765 B1

300

stepOnLiquid.yuv - VideoViewer

File Format Save Help

YUV420: Total Frames: 2087
Frame: 593                    Display Range: 0-2086

Non-Flesh Tone Saturation    Flesh Tone Saturation

320                          310

☐ Show Flesh Tone mask

VideoColorEnhancementDemo

FIG. 8

23

Lowpass image $I_{\text{LP}}$    Skin color
likelihood map $a$

Load $R,\ G,\ B$ at (x,y) and its skin
color likelihood $a_{\text{LP}}$(x,y)

$R$(x,y)
$G$(x,y)
$B$(x,y)

$a_{\text{LP}}$(x,y)

Color mapping
$(R,G,B) \rightarrow (R_S,G_S,B_S)$
without color gamut expansion.

Color mapping
$(R,G,B) \rightarrow (R_{ns},G_{ns},B_{ns})$
with color gamut expansion.

$R_S$(x,y)
$G_S$(x,y)
$B_S$(x,y)

$R_{ns}$(x,y)
$G_{ns}$(x,y)
$B_{ns}$(x,y)

$R_{\text{EN}}$(x,y)$=a_{\text{LP}}$(x,y)$R_S$(x,y)
     $+(1-a_{\text{LP}}$(x,y))$R_{ns}$(x,y)
$G_{\text{EN}}$(x,y)$=a_{\text{LP}}$(x,y)$G_S$(x,y)
     $+(1-a_{\text{LP}}$(x,y))$G_{ns}$(x,y)
$B_{\text{EN}}$(x,y)$=a_{\text{LP}}$(x,y)$B_S$(x,y)
     $+(1-a_{\text{LP}}$(x,y))$B_{ns}$(x,y)

$R_{\text{EN}}$(x,y)
$G_{\text{EN}}$(x,y)
$B_{\text{EN}}$(x,y)

# FIG. 9

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 20030043394 A1
- US 20030108245 A1
- EP 1453002 A2
- GB 2388737 A
- US 20050281458 A1

## Non-patent literature cited in the description

- **KRAMBERGER I.** Real-time skin feature identification in a time-sequential video stream. *OPTICAL ENGINEERING SPIE USA,* April 2005, vol. 44 (4), ISBN 0091-3286, 47201-1
- **J.S. LEE.** Digital image enhancement and noise filtering by use of local statistics. *IEEE Trans. Pattern Analysis and Machine Intelligence,* March 1980, vol. PAMI-2 (2), 165-168